# EUROPÄISCHE PATENTANMELDUNG

(11) **EP 4 520 589 A1**
(43) Veröffentlichungstag der Anmeldung: **12.03.2025**
(21) Anmeldenummer: 24195273.8
(22) Anmeldetag: 20.08.2024
(51) Int. Cl.: B60P 3/36

(54) **FREIZEITFAHRZEUG UND LIEGEEINRICHTUNG FÜR EINEN INNENRAUM**

(30) Priorität: 25.08.2023 DE 102023122926
(71) Anmelder: Bürstner GmbH & Co. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Liegeeinrichtung (11) für einen Innenraum (19) von Freizeitfahrzeugen (1), insbesondere von Wohnmobilen und/oder Campervans und/oder auf einem Hochdachkombi basierenden Freizeitfahrzeugen (1), mit einer zumindest näherungsweise horizontal ausgerichteten Auflagefläche (40) und zumindest einem Innenzugelement-versteiften Bettelement (41). Vorgeschlagen wird, dass das Bettelement (41) ein Winkelstück (42) aufweist, das einen Liegeschenkel (43) und einen Stützschenkel (44) umfasst, dass das Bettelement (41) über den Stützschenkel (44) vertikal abstützbar ist und dass die Auflagefläche (40) zumindest teilweise an dem Liegeschenkel (43) ausgebildet ist. Ferner ist ein Freizeitfahrzeug (1) mit solch einer Liegeeinrichtung (11) angegeben.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

Aus der DE 10 2021 103 281 A1 ist ein Hubbett für ein Campingfahrzeug bekannt. Das bekannte Hubbett weist eine Matratze auf, bei der ein Innenzugelement-versteiftes Brett vorgesehen ist, das beispielsweise als Dropstitch- und/oder durch Bänder versteiftes und/oder iSUP-Brett ausgebildet sein kann.

Wenn der Innenraum des Freizeitfahrzeugs besonders begrenzt ist, dann ist ein Bett nicht oder nur in eingeschränkter Form realisierbar. Insbesondere kann der Innenraum nicht dafür geeignet und/oder zu klein sein, um ein Hubbett zu realisieren. Ferner ist die Realisierung eines Bettes bei einem kleinen Innenraum gegebenenfalls nicht möglich, wenn zugleich Stauraum für sperrige Güter benötigt wird.

Aufgabe der Erfindung ist es, eine Liegeeinrichtung für ein Freizeitfahrzeug und ein Freizeitfahrzeug anzugeben, die verbessert ausgestaltet sind. Insbesondere ist es eine Aufgabe der Erfindung eine Liegeeinrichtung für ein Freizeitfahrzeug und ein Freizeitfahrzeug anzugeben, bei denen bei einem besonders begrenzten Innenraum des Freizeitfahrzeugs ein Bett im Innenraum realisierbar ist.

Die Aufgabe wird durch eine Liegeeinrichtung mit den Merkmalen des unabhängigen Patentanspruchs 1 und durch ein Freizeitfahrzeug mit den Merkmalen des Patentanspruchs 16 gelöst. Vorteilhafte Weiterbildung der Erfindung sind in den Unteransprüchen angegeben.

Die Aufgabe wird durch eine Liegeeinrichtung für einen Innenraum von Freizeitfahrzeugen, insbesondere von Wohnmobilen und/oder Campervans und/oder auf einem Hochdachkombi basierenden Freizeitfahrzeugen, mit einer zumindest näherungsweise horizontal ausgerichteten Auflagefläche und zumindest einem Innenzugelement-versteiften Bettelement gelöst, wobei das Bettelement ein Winkelstück aufweist, das einen Liegeschenkel und einen Stützschenkel umfasst, wobei das Bettelement über den Stützschenkel vertikal abstützbar ist und wobei die Auflagefläche zumindest teilweise an dem Liegeschenkel ausgebildet ist.

Ferner wird die Aufgabe durch ein Freizeitfahrzeug, insbesondere ein Wohnmobil und/oder einen Campervan und/oder ein auf einem Hochdachkombi basierendes Freizeitfahrzeug, mit zumindest einer solchen Liegeeinrichtung gelöst.

Vorteilhaft ist es, dass das Bettelement ein Zusatzstück aufweist, das im Bereich eines Winkelscheitels des Winkelstücks mit dem Winkelstück verbunden oder verbindbar ist, und dass die Auflagefläche teilweise an dem Zusatzstück ausgebildet ist. Dadurch kann die Liegefläche insbesondere verlängert werden. Speziell kann die Liegefläche in Richtung der Fahrzeugfront verlängert werden.

Vorteilhaft ist es, dass das Zusatzstück so mit dem Winkelscheitel verbunden ist, dass das Zusatzstück relativ zu dem Winkelstück schwenkbar ist. Dadurch ist auch im aufgebauten beziehungsweise aufgeblasenen Zustand auf sehr einfache Weise temporär ein Umbau möglich, der eine Fahrt mit dem Freizeitfahrzeug beziehungsweise eine Benutzung des Fahrer- und des Beifahrersitzes ermöglicht.

Vorteilhaft ist es, dass das Zusatzstück auf dem Liegeschenkel des Winkelstücks ablegbar ist. Hierdurch kann eine Platz sparende Anordnung ermöglicht werden, so dass beispielsweise für eine Fahrt eine vorteilhafte Beladung möglich ist.

Vorteilhaft ist es, dass zumindest ein Zugmittel, insbesondere ein als Gewebeband ausgebildetes Zugmittel, vorgesehen ist, und dass das Zusatzstück mittels des zumindest einen Zugmittels vertikal aufhängbar ist. Dadurch ist eine zuverlässige Befestigung möglich. Außerdem kann beispielsweise eine Aufhängung im Bereich von Haltegriffen neben dem Fahrer- und Beifahrersitz ermöglicht werden.

Vorteilhaft ist es, dass das zumindest eine Zugmittel mit dem Zusatzstück verbunden, insbesondere vernäht und/oder durch Kunststoffschweißen verbunden, ist. Dadurch wird ein Lösen der Aufhängung zuverlässig verhindert. Es kann eine Verliersicherung gewährleistet werden. Außerdem kann eine intuitive Befestigung gewährleistet werden, die eine optimale Aufhängung gewährleistet.

Vorteilhaft ist es, dass zumindest eine Ablageeinrichtung vorgesehen ist, die eine Ablagefläche aufweist, und dass die Auflagefläche teilweise durch die die Ablagefläche der Ablageeinrichtung gebildet ist. Dadurch kann die Auflagefläche in vorteilhafter Weise durch eine weitere Einrichtung gebildet werden. Dadurch steigt die Funktionalität des Freizeitfahrzeugs, was mehrere Funktionen auch bei sehr begrenzten Platzverhältnissen ermöglicht.

Vorteilhaft ist es, dass die Ablageeinrichtung ein Auflageelement, insbesondere ein Auflagebrett, aufweist, und dass der Liegeschenkel an einem von einem Winkelscheitel des Winkelstücks abgewandten Ende auf dem Auflagebrett abstützbar ist. Hierdurch ergibt sich eine optimale Addition der einzelnen Teilflächen zu der Auflagefläche.

Vorteilhaft ist es, dass das Auflageelement beziehungsweise Auflagebrett als aufklappbares Auflageelement beziehungsweise Auflagebrett ausgestaltet ist und dass die Ablageeinrichtung eine ausziehbare Ablagefläche aufweist. Hierdurch kann die Ablageeinrichtung so ausgeführt werden, dass neben der Ablageeinrichtung ein Stauraum, insbesondere ein Stauraum für sperrige Güter, wie ein Fahrrad, geschaffen werden kann.
dass zumindest eine Ablageeinrichtung vorgesehen ist, die eine Ablagefläche aufweist, und dass der Liegeschenkel des Winkelstücks zumindest abschnittsweise auf der Ablagefläche der Ablageeinrichtung abstützbar ist. Dieses Ausgestaltung kann beispielsweise bei einer größeren Fahrzeuglänge vorteilhaft sein, um eine große Flexibilität für die Anordnung von Einrichtungen im Heck mit einer Realisierung eines Bettes zu kombinieren.

Vorteilhaft ist es, dass das Winkelstück so ausgestaltet ist, dass bei einer Anordnung im Innenraum des Freizeitfahrzeugs unter dem Winkelstück ein Laderaum gebildet ist. Hierdurch kann die Beladung des Freizeitfahrzeugs optimiert werden. Insbesondere kann ein Sichtschutz und/oder ein Schutz vor direkter Besonnung in dem Laderaum gewährleistet werden. Ferner kann ein Diebstahlschutz gewährleistet werden.

Vorteilhaft ist es, dass das Winkelstück so ausgestaltet ist, dass bei einer Anordnung im Innenraum des Freizeitfahrzeugs der Laderaum unter dem Winkelstück von dem übrigen Innenraum zumindest im Wesentlichen getrennt ist. Hierdurch ist eine Optimierung der genannten Vorteile möglich.

Vorteilhaft ist es, dass das Bettelement so ausgestaltet ist, dass bei einer Anordnung im Innenraum des Freizeitfahrzeugs ein über dem Bettelement unter hinter dem Fahrer- und Beifahrersitz liegender Stauraum gebildet ist, der vorzugsweise zur Aufnahme sperriger Gegenstände geeignet ist. Beispielsweise kann ein Wassersportgerät, wie ein aufblasbares Kanu, ein kleines schwimmfähiges Brett, ein liegendes Fahrrad, ein Sonnenschirm oder ein Campingtisch mit Campingstühlen, transportiert werden.

Vorteilhaft ist es, dass ein weiteres Bettelement vorgesehen ist, das die Funktion einer Matratze aufweist, und dass das weitere Bettelement für eine Benutzung zumindest im Wesentlichen vollständig auf der Auflagefläche abgestützt ist. Hierdurch kann die gesamte Auflagefläche durchgehend gepolstert werden. Beispielsweise kann das weitere Bettelement eine Luftmatratze mit Memoryschaum aufweisen.

Vorteilhaft ist es, dass eine quer zur Längsrichtung des Freizeitfahrzeugs betrachtete Breite der Auflagefläche zumindest näherungsweise gleich einer Innenraumbreite des Innenraums des Freizeitfahrzeugs ist und/oder dass eine entlang der Längsrichtung betrachtete Länge der Auflagefläche zumindest näherungsweise gleich einer Länge eines Heckbereichs des Innenraums zwischen einer Heckklappe und dem Fahrersitz beziehungsweise dem Beifahrersitz ist. Somit ist eine optimal große Liegefläche realisierbar, wobei vorzugsweise die Möglichkeit besteht, mit geringem Umbauaufwand einen fahrfähigen Zustand des Freizeitfahrzeugs herzustellen, um beispielsweise Einkaufs- oder Besichtigungsfahrten am Urlaubsort zu machen.

Vorteilhaft ist es, dass eine zumindest teilweise umklappbare Rückbank vorgesehen ist und dass der Stützschenkel des Winkelstücks so ausgestaltet ist, dass das Winkelstück über den Stützschenkel an der zumindest teilweise umgeklappten Rücksitzbank vertikal abstützbar ist. Hierdurch kann eine belastbare Abstützung realisiert werden, so dass sich ein hoher Schlafkomfort ergibt.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einer Liegeeinrichtung und einer Ablageeinrichtung entsprechend einem ersten Ausführungsbeispiel in einer schematischen, räumlichen Darstellung, wobei eine Ansicht von hinten bei geöffneter Heckklappe dargestellt ist;
- Fig. 2: eine auszugsweise, geöffnete, teilweise geschnittene Darstellung des in Fig. 1 gezeigten Freizeitfahrzeugs aus der mit II bezeichneten Blickrichtung, wobei eine Rückbank umgeklappt und ein Fahrer- und ein Beifahrersitz nach vorne geklappt sind;
- Fig. 3: das in Fig. 2 gezeigte Freizeitfahrzeug, wobei ein Bettelement der Liegeeinrichtung im Innenraum aufgebaut ist;
- Fig. 4: das in Fig. 3 gezeigte Freizeitfahrzeug, wobei ein weiteres Bettelement der Liegeeinrichtung aufgebaut ist;
- Fig. 5: das in Fig. 3 gezeigte Freizeitfahrzeug, wobei das Bettelement so weit zusammengeklappt ist, dass eine Fahrt mit dem Freizeitfahrzeug möglich ist;
- Fig. 6: eine Draufsicht auf das in Fig 4 gezeigte Freizeitfahrzeug in einer geöffneten, teilweise geschnittenen Darstellung aus der mit VI bezeichneten Blickrichtung;
- Fig. 7: das in Fig. 1 gezeigte Freizeitfahrzeug entsprechend einem zweiten Ausführungsbeispiel und
- Fig. 8: das in Fig. 7 gezeigte Freizeitfahrzeug aus der mit VIII gezeigten Blickrichtung, wobei die Liegeeinrichtung aufgebaut ist.

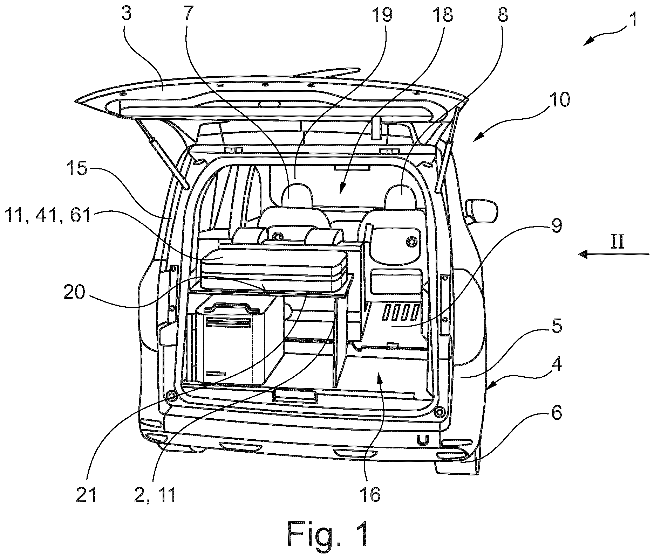

Fig. 1 zeigt ein Freizeitfahrzeug 1 mit einer Ablageeinrichtung 2 entsprechend einem ersten Ausführungsbeispiel in einer schematischen, räumlichen Darstellung, wobei eine Ansicht von hinten bei geöffneter Heckklappe 3 dargestellt ist. Das Freizeitfahrzeug 1 kann auf einem Basisfahrzeug 4 basieren. Als Basisfahrzeug 4 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 5, das Fahrwerk 6, der Fahrersitz 7, der Beifahrersitz 8 und die Rückbank 9 übernommen. Die Heckklappe 3 ist vorzugsweise die Heckklappe 3 des Basisfahrzeugs 4. Ferner ist ein Dach 10 vorgesehen.

Es sind aber geeignete Modifikationen möglich, wie es bei dem zweiten Ausführungsbeispiel exemplarisch anhand des Daches 10 erläutert ist.

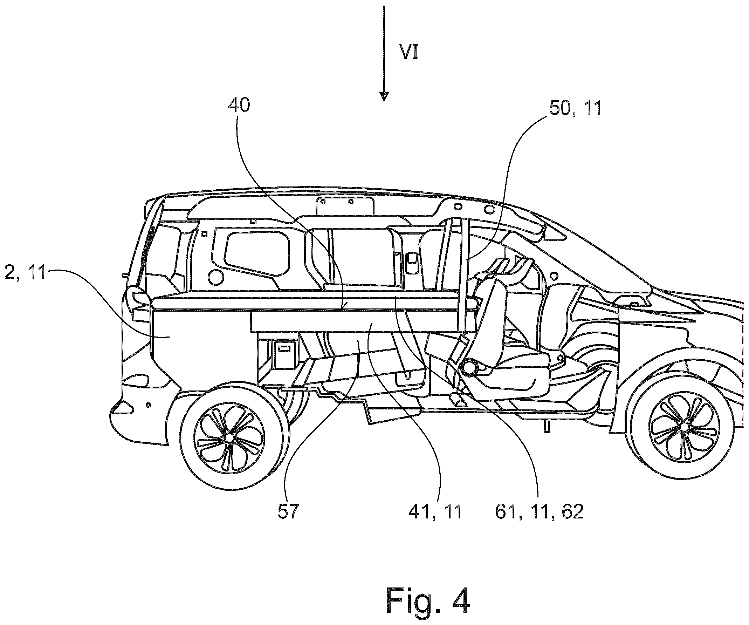

Das Freizeitfahrzeug 1 weist einer Liegeeinrichtung 11 auf, die in Fig. 4 im aufgebauten Zustand gezeigt ist. Die Liegeeinrichtung 11 kann aber auch unabhängig von einem Freizeitfahrzeug 1 hergestellt und vertrieben werden.

Bei dem in Fig. 1 gezeigte Freizeitfahrzeug 1 ist die Rückbank 9 teilweise umgeklappt. Dadurch ist im Heck 15 ein Stauraum 16 für sperrige Gegenstände, wie ein Fahrrad geschaffen.

Die Liegeeinrichtung 40 kann bei einer möglichen Ausgestaltung die Ablageeinrichtung 2 aufweisen. Die Ablageeinrichtung 2 ist in einem Heckraum 18 angeordnet, der Teil eines Innenraums 19 des Freizeitfahrzeugs 1 ist. In diesem Ausführungsbeispiel ist das Basisfahrzeug 4 ein Hochdachkombi 4, der nur einen begrenzten Innenraum 19 aufweist. Hierbei ist in diesem Ausführungsbeispiel genau eine Ablageeinrichtung 2 vorgesehen, was bei dem begrenzten Innenraum 19 bevorzugt ist.

Die Ablageeinrichtung 2 weist eine horizontal ausgerichteten Ablagefläche 20 auf. Ferner umfasst die Ablageeinrichtung 2 ein Oberteil 21 und ein ausziehbares Element 23, das zum Vergrößern der Ablagefläche 20 quer zu einer Längsrichtung 24 des Freizeitfahrzeugs 1 ausgezogen wird.

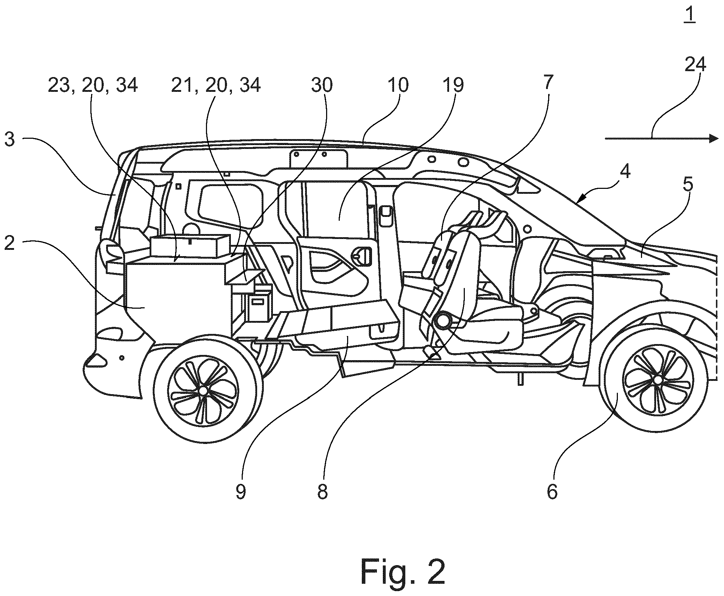

Im folgenden wird die Ausgestaltung des Ausführungsbeispiels auch unter Bezugnahme auf Fig. 2 weiter beschrieben.

Fig. 2 zeigt eine auszugsweise, geöffnete, teilweise geschnittene Darstellung des in Fig. 1 gezeigten Freizeitfahrzeugs 1 aus der mit II bezeichneten Blickrichtung, wobei die Rückbank 9 umgeklappt und ein Fahrersitz 7 und ein Beifahrersitz 8 nach vorne geklappt sind.

An der Ablageeinrichtung 2 ist ein Auflageelement 30 vorgesehen. Das Auflageelement 30 ist durch Aufklappen vergrößerbar. Im aufgeklappten Zustand weist das Auflageelement 30 quer zur Längsrichtung 24 betrachtet eine vergrößerte Breite auf, die sich vorzugsweise über eine Innenraumbreite 32 erstreckt. Entsprechend erstreckt sich die durch das ausgezogene Element 23 vergrößerte Ablagefläche 20 vorzugsweise über die Innenraumbreite 32.

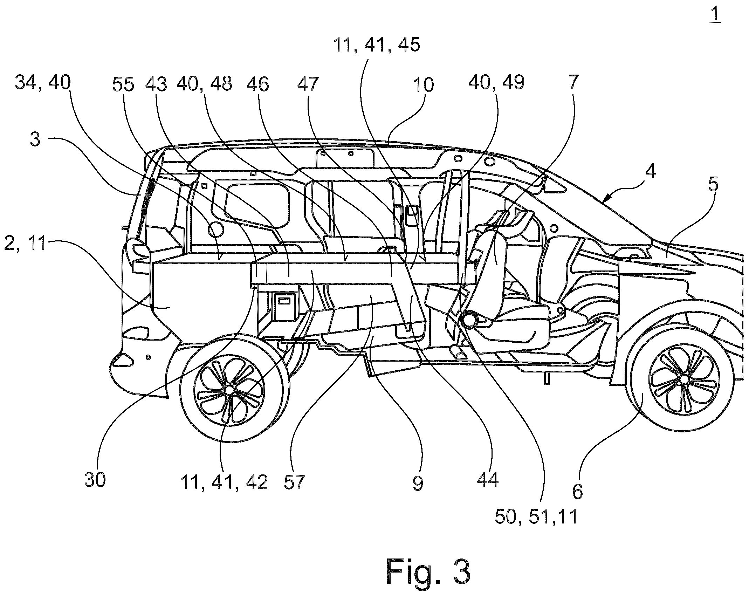

Das Auflageelement 30 ist vertikal betrachtet unter der Ablagefläche 20 angeordnet. Ferner ist das Auflageelement 30 horizontal betrachtet neben der Ablagefläche 20 angeordnet. Das Auflageelement 30 bildet im vergrößerten Zustand in diesem Ausführungsbeispiel eine Auflageteilfläche 34 aus. Die Auflageteilfläche 34 ist Teil einer Auflagefläche 40 der Liegeeinrichtung 11. Die Liegeeinrichtung 11 weist im Aufgebauten Zustand dann eine zumindest näherungsweise horizontal ausgerichteten Auflagefläche 40 auf, wie es im folgenden auch unter Bezugnahme auf Fig. 3 weiter erläutert ist.

Fig. 3 zeigt das in Fig. 2 gezeigte Freizeitfahrzeug 1, wobei ein Bettelement 41 der Liegeeinrichtung 11 im Innenraum 19 aufgebaut ist. Die Liegeeinrichtung 11 dient für den Innenraum 19 des Freizeitfahrzeugs 1. Besonders bevorzugt ist eine Anwendung bei einem auf einem Hochdachkombi als Basisfahrzeug 4 basierenden Freizeitfahrzeug 1.

Die Liegeeinrichtung 11 weist ein Innenzugelement-versteiftes Bettelement 41 auf. Das Bettelement 41 weist ein Winkelstück 42 auf, das einen Liegeschenkel 43 und einen Stützschenkel 44 umfasst. Das Bettelement 41 ist über den Stützschenkel 44 vertikal am Freizeitfahrzeug 1 abgestützt. Die Auflagefläche 40 ist auch teilweise an dem Liegeschenkel 43 ausgebildet ist.

Ferner weist das Bettelement 41 ein Zusatzstück 45 aufweist, das im Bereich eines Winkelscheitels 46 des Winkelstücks 42 mit dem Winkelstück 42 verbunden ist. Die Auflagefläche 40 ist auch teilweise an dem Zusatzstück 45 ausgebildet. Das Zusatzstück 45 ist mit dem Winkelscheitel 46 verbunden. In diesem Ausführungsbeispiel ist das Zusatzstück 45 direkt an der Kante 47 des Winkelscheitels 46 mit dem Zusatzstück 45 verbunden. Das Zusatzstück 45 ist dadurch relativ zu dem Winkelstück 42 schwenkbar.

Eine Auflageteilfläche 48 der Auflagefläche 40 ist an dem Liegeschenkel 43 ausgebildet. Eine zusätzliche Auflageteilfläche 49 der Auflagefläche 40 ist an dem Zusatzstück 45 ausgebildet. In diesem Ausführungsbeispiel ist durch die Auflageteilflächen 34, 48, 49 additiv die Auflagefläche 40 gebildet.

An dem Zusatzstück 45 ist ein Zugmittel 50 vorgesehen, das als Gewebeband 51 ausgebildet ist. Das Zugmittel 50 ist mit dem Zusatzstück 45 verbunden. Insbesondere kann das Gewebeband 51 mit dem Zusatzstück 45 vernäht und/oder durch Kunststoffschweißen verbunden sein. Das Zusatzstück 45 ist mittels des Zugmittels 50 vertikal aufgehängt, wie es in Fig. 3 gezeigt ist.

Die Ablageeinrichtung 2 weist das als Auflagebrett 30 ausgebildete Auflageelement 30 auf. Der Liegeschenkel 43 ist an einem von einem Winkelscheitel 46 des Winkelstücks 42 abgewandten Ende 55 auf dem Auflageelement 30 abgestützt.

Das Winkelstück 42 so ausgestaltet ist, dass unter dem Winkelstück 42 ein Laderaum 57 gebildet ist. Hierbei ist von außerhalb des Freizeitfahrzeugs 1 kein Blick in den Laderaum 57 möglich. Vorzugsweise ist das Winkelstück 42 hinsichtlich seiner geometrischen Dimensionen so ausgestaltet ist, dass bei einer Anordnung im Innenraum 19 des Freizeitfahrzeugs 1 der Laderaum 57 unter dem Winkelstück 42 von dem übrigen Innenraum 19 zumindest im Wesentlichen getrennt ist.

Fig. 4 zeigt das in Fig. 3 gezeigte Freizeitfahrzeug 1, wobei ein weiteres Bettelement 61 der Liegeeinrichtung 11 aufgebaut. Das weitere Bettelement 61 hat zumindest die Funktion einer Matratze 62. Das weitere Bettelement 61 ist für eine Benutzung der Liegeeinrichtung 11 zumindest im Wesentlichen vollständig auf der Auflagefläche 40 abgestützt.

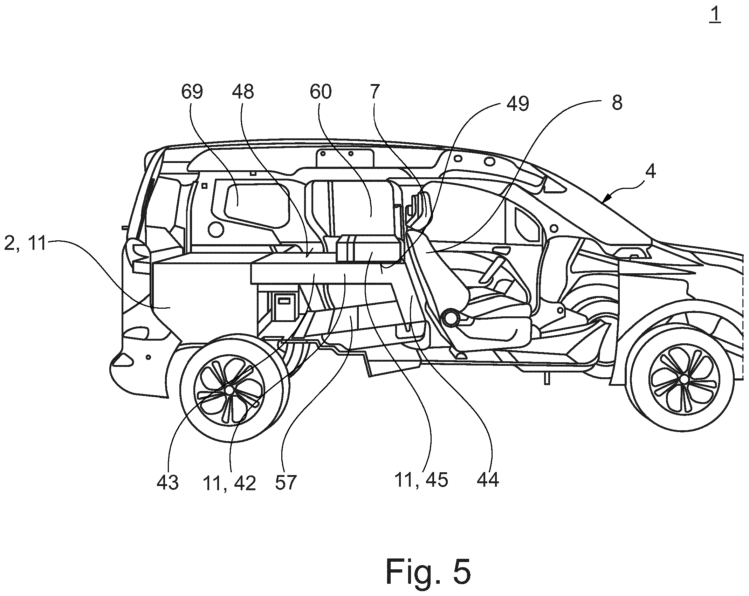

Fig. 5 zeigt das in Fig. 3 gezeigte Freizeitfahrzeug, wobei das Bettelement 41 so weit zusammengeklappt ist, dass eine Fahrt mit dem Freizeitfahrzeug 2 möglich ist. Hierfür ist das Zusatzstück 45 ist auf dem Liegeschenkel 43 des Winkelstücks 42 abgelegt. Die Auflageteilfläche 49 des Zusatzstücks 45 liegt dann auf der Auflageteilfläche 48 des Liegeschenkels 43 des Winkelstücks 42.

Das Bettelement 41 ist außerdem so ausgestaltet ist, dass bei einer Anordnung im Innenraum 19 des Freizeitfahrzeugs 1 ein über dem Bettelement 41 unter hinter dem Fahrersitz 7 und Beifahrersitz 8 liegender Stauraum 60 gebildet ist, der vorzugsweise zur Aufnahme sperriger Gegenstände geeignet ist, wenn das Zusatzstück 45 auf den Liegeschenkel 43 geklappt ist.

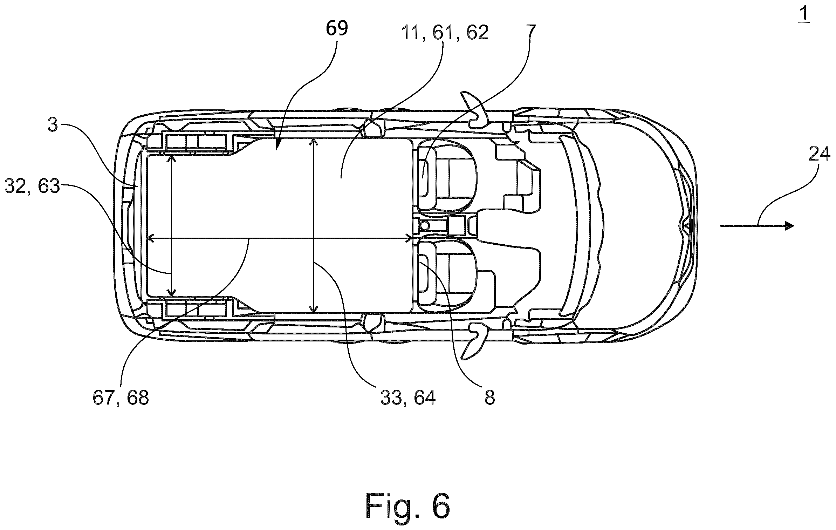

Fig. 6 zeigt eine Draufsicht auf das in Fig 4 gezeigte Freizeitfahrzeug 1 in einer geöffneten, teilweise geschnittenen Darstellung aus der mit VI bezeichneten Blickrichtung. Quer zur Längsrichtung 24 des Freizeitfahrzeugs 1 betrachtete Breiten 63, 64 der Auflagefläche 40 sind zumindest näherungsweise gleich den jeweils zugeordneten Innenraumbreiten 32, 33 des Innenraums 19 des Freizeitfahrzeugs 1. Ferner ist die entlang der Längsrichtung 24 betrachtete Länge 67 der Auflagefläche 40 zumindest näherungsweise gleich einer Länge 68 eines Heckbereichs 69 des Innenraums 19 zwischen einer Heckklappe 3 und dem Fahrersitz 7 beziehungsweise dem Beifahrersitz 8.

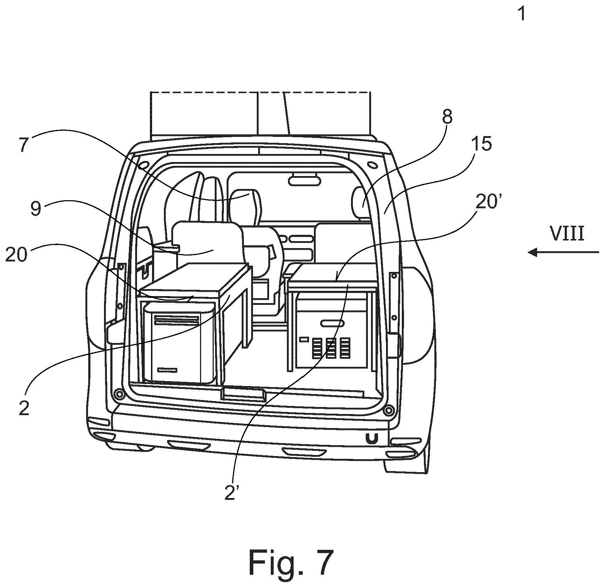

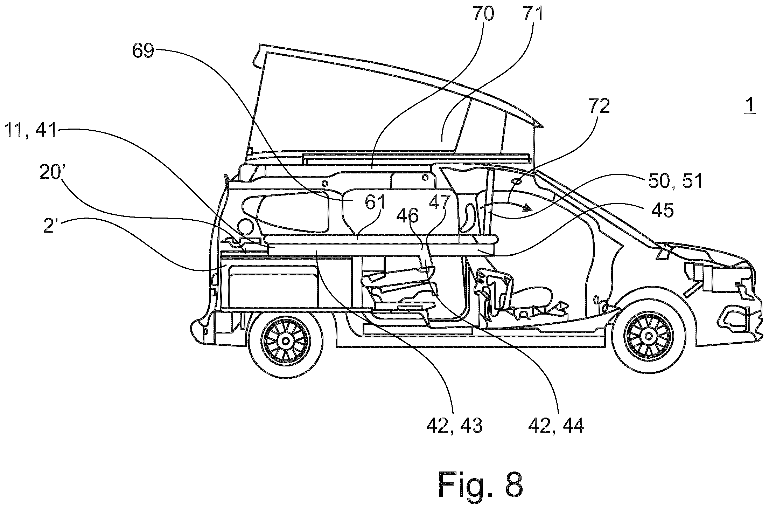

Fig. 7 zeigt das in Fig. 1 gezeigte Freizeitfahrzeug 1 entsprechend einem zweiten Ausführungsbeispiel. Hierbei ist exemplarisch an dem Dach 10 ein geeigneter Dachausschnitt 70 vorgesehen, um beispielsweise den Aufstieg in ein Dachzelt 71 zu ermöglichen. Ferner zeigt Fig. 8 das in Fig. 7 gezeigte Freizeitfahrzeug 1 aus der mit VIII gezeigten Blickrichtung, wobei die Liegeeinrichtung 11 aufgebaut ist.

In diesem Ausführungsbeispiel sind Ablageeinrichtungen 2, 2' vorgesehen ist, die jeweils eine Ablagefläche 20, 20' aufweisen. Der Liegeschenkel 43 des Winkelstücks 42 ist auf den Ablageflächen 20, 20' der Ablageeinrichtung 2 abgestützt. Dadurch können im Heck auch mehrere Ablageeinrichtungen 2, 2' in unterschiedlichen Anordnungen angeordnet werden.

Hierbei kann auch eine schmalere Liegeeinrichtung 11 realisiert sein. Wenn der Fahrersitz 7 nach vorne geklappt ist, wie es durch den Pfeil 72 veranschaulicht ist, dann kann auch eine breitere Liegeeinrichtung 11 vorgesehen sein.

Wenn die Rückbank 9 umgeklappt ist, dann ist das Winkelstück 42 über den Stützschenkel 44 an der zumindest teilweise umgeklappten Rücksitzbank 9 vertikal abgestützt. Dies ist entsprechend bei dem ersten Ausführungsbeispiel realisiert, wie es in Fig. 3, 4 und 5 gezeigt ist.

Die Erfindung ist nicht auf die beschriebenen Ausführungsformen beschränkt.

## Patentansprüche

1. Liegeeinrichtung (11) für einen Innenraum (19) von Freizeitfahrzeugen (1), insbesondere von Wohnmobilen und/oder Campervans und/oder auf einem Hochdachkombi basierenden Freizeitfahrzeugen (1), mit einer zumindest näherungsweise horizontal ausgerichteten Auflagefläche (40) und zumindest einem Innenzugelement-versteiften Bettelement (41),
**dadurch gekennzeichnet,**
**dass** das Bettelement (41) ein Winkelstück (42) aufweist, das einen Liegeschenkel (43) und einen Stützschenkel (44) umfasst, dass das Bettelement (41) über den Stützschenkel (44) vertikal abstützbar ist und dass die Auflagefläche (40) zumindest teilweise an dem Liegeschenkel (43) ausgebildet ist.

2. Liegeeinrichtung nach Anspruch 1,
**dadurch gekennzeichnet,**
**dass** das Bettelement (41) ein Zusatzstück (45) aufweist, das im Bereich eines Winkelscheitels (46) des Winkelstücks (42) mit dem Winkelstück (42) verbunden oder verbindbar ist, und dass die Auflagefläche (40) teilweise an dem Zusatzstück (45) ausgebildet ist.

3. Liegeeinrichtung nach Anspruch 2,
**dadurch gekennzeichnet,**
**dass** das Zusatzstück (45) so mit dem Winkelscheitel (46) verbunden ist, dass das Zusatzstück (45) relativ zu dem Winkelstück (42) schwenkbar ist.

4. Liegeeinrichtung nach Anspruch 2 oder 3,
**dadurch gekennzeichnet,**
**dass** das Zusatzstück (45) auf dem Liegeschenkel (43) des Winkelstücks (42) ablegbar ist.

5. Liegeeinrichtung nach einem der Ansprüche 2 bis 4,
**dadurch gekennzeichnet,**
**dass** zumindest ein Zugmittel (50), insbesondere ein als Gewebeband (51) ausgebildetes Zugmittel (50), vorgesehen ist, und dass das Zusatzstück (45) mittels des zumindest einen Zugmittels (50) vertikal aufhängbar ist.

6. Liegeeinrichtung nach Anspruch 5,
**dadurch gekennzeichnet,**
**dass** das zumindest eine Zugmittel (50) mit dem Zusatzstück (45) verbunden, insbesondere vernäht und/oder durch Kunststoffschweißen verbunden, ist.

7. Liegeeinrichtung nach einem der vorhergehenden Ansprüche,
**dadurch gekennzeichnet,**
**dass** zumindest eine Ablageeinrichtung (2) vorgesehen ist, die eine Ablagefläche (20) aufweist, und dass die Auflagefläche (40) teilweise durch die die Ablagefläche (20) der Ablageeinrichtung (2) gebildet ist.

8. Liegeeinrichtung nach Anspruch 7,
**dadurch gekennzeichnet,**
**dass** die Ablageeinrichtung (2) ein Auflageelement (30), insbesondere ein Auflagebrett (30), aufweist, und dass der Liegeschenkel (43) an einem von einem Winkelscheitel (46) des Winkelstücks (42) abgewandten Ende (55) auf dem Auflageelement (30) abstützbar ist.

9. Liegeeinrichtung nach Anspruch 7 oder 8,
**dadurch gekennzeichnet,**
**dass** das Auflageelement (30) als aufklappbares Auflageelement (30) ausgestaltet ist und dass die Ablageeinrichtung (2) eine ausziehbare Ablagefläche (20) aufweist.

10. Liegeeinrichtung nach einem der Ansprüche 1 bis 6,
**dadurch gekennzeichnet,**
**dass** zumindest eine Ablageeinrichtung (2, 2`) vorgesehen ist, die eine Ablagefläche (20, 20`) aufweist, und dass der Liegeschenkel (43) des Winkelstücks (42) zumindest abschnittsweise auf der Ablagefläche (20, 20`) der Ablageeinrichtung (2, 2`) abstützbar ist.

11. Liegeeinrichtung nach einem der vorhergehenden Ansprüche,
**dadurch gekennzeichnet,**
**dass** das Winkelstück (42) so ausgestaltet ist, dass bei einer Anordnung im Innenraum (19) des Freizeitfahrzeugs (1) unter dem Winkelstück (42) ein Laderaum (57) gebildet ist.

12. Liegeeinrichtung nach Anspruch 11,
**dadurch gekennzeichnet,**
**dass** das Winkelstück (42) so ausgestaltet ist, dass bei einer Anordnung im Innenraum (19) des Freizeitfahrzeugs (1) der Laderaum (57) unter dem Winkelstück (42) von dem übrigen Innenraum (19) zumindest im Wesentlichen getrennt ist.

13. Liegeeinrichtung nach einem der vorhergehenden Ansprüche,
**dadurch gekennzeichnet,**
**dass** das Bettelement (41) so ausgestaltet ist, dass bei einer Anordnung im Innenraum (19) des Freizeitfahrzeugs (1) ein über dem Bettelement (41) unter hinter dem Fahrersitz (7) und Beifahrersitz (8) liegender Stauraum (60) gebildet ist, der vorzugsweise zur Aufnahme sperriger Gegenstände geeignet ist.

14. Liegeeinrichtung nach einem der vorhergehenden Ansprüche,
**dadurch gekennzeichnet,**
**dass** ein weiteres Bettelement (61) vorgesehen ist, das die Funktion einer Matratze (62) aufweist, und dass das weitere Bettelement (61) für eine Benutzung zumindest im Wesentlichen vollständig auf der Auflagefläche (40) abgestützt ist.

15. Liegeeinrichtung nach einem der vorhergehenden Ansprüche,
**dadurch gekennzeichnet,**
**dass** zumindest eine quer zur Längsrichtung (24) des Freizeitfahrzeugs (1) betrachtete Breite (63, 64) der Auflagefläche (40) zumindest näherungsweise gleich zumindest einer Innenraumbreite (32, 33) des Innenraums (19) des Freizeitfahrzeugs (1) ist und/oder dass eine entlang der Längsrichtung (24) betrachtete Länge (67) der Auflagefläche (40) zumindest näherungsweise gleich einer Länge (68) eines Heckbereichs (69) des Innenraums (19) zwischen einer Heckklappe (3) und dem Fahrersitz (7) beziehungsweise dem Beifahrersitz (8) ist.

16. Freizeitfahrzeug (1), insbesondere Wohnmobil und/oder Campervan und/oder auf einem Hochdachkombi basierendes Freizeitfahrzeug, mit zumindest einer Liegeeinrichtung (2) nach einem der Ansprüche 1 bis 10.

17. Freizeitfahrzeug nach Anspruch 16,
**dadurch gekennzeichnet,**
**dass** eine zumindest teilweise umklappbare Rückbank (9) vorgesehen ist und dass der Stützschenkel (44) des Winkelstücks (42) so ausgestaltet ist, dass das Winkelstück (42) über den Stützschenkel (44) an der zumindest teilweise umgeklappten Rücksitzbank (9) vertikal abstützbar ist.
